# EUROPEAN PATENT APPLICATION

(11) **EP 4 101 354 A1**
(43) Date of publication of application: **14.12.2022**
(21) Application number: 21178936.7
(22) Date of filing: 11.06.2021
(51) Int. Cl.: A47J 43/07, A47J 43/046, A47J 43/18, A47J 36/20

(54) **ATTACHMENT FOR A KITCHEN MACHINE AND COOKING POT ASSEMBLY**

(71) Applicant: Harbour Star International Ltd., Mongkok, Kowloon (HK)
(72) Inventor: Schroeder, Thorsten, Mongkok, Kowloon (HK)
(74) Representative: Gunzelmann, Rainer

(57) **Abstract**

An attachment (10) for a kitchen machine comprises a holder (12) configured to hold items to be heated, and a first handle (21) and a second handle (22) extending from opposite edges of the holder (12) in directions away from each other and away from an axis perpendicular to the holder (12), and configured to hold the attachment (10) in a fixed manner in a cooking pot (100) of the kitchen machine. A cooking pot assembly for a kitchen machine comprises a cooking pot (100) and the attachment (10), wherein the cooking pot (100) comprises a bottom wall (110) and a tapered sidewall (120), and a blade assembly (140) located above the bottom wall (110) and configured to be rotated. The attachment (10) is releasably fixed in the cooking pot (100) above the blade assembly (140).

## Description

The disclosure relates to an attachment for a kitchen machine comprising a cooking pot. The disclosure further relates to a cooking pot assembly and a kitchen machine. The attachment, the cooking pot and the kitchen machine can preferably be used for sous vide cooking.

Sous vide cooking is a cooking method where food is placed in a container (for example, a plastic bag), the container being partially or fully vacuumed, and cooked in a water bath for longer than usual cooking times at a precisely regulated temperature. A constant temperature and even temperature distribution of the water bath are crucial for the success of sous vide cooking.

Known kitchen machines or cooking pots without a stirring device cannot ensure the required constant temperature and even temperature distribution of the water bath. To solve this problem, GB 2566720 A2 proposes an attachment for a kitchen machine for sous vide cooking comprising a holder for holding a sous vide package to be heated in a heating liquid and a mixing member driven by a drive shaft for enabling more even heating of the sous vide package.

Other known kitchen machines comprising cooking pots with a stirring device can be used with a cooking mat for separating the sous vide package from the stirring device. However, it is inconvenient in such kitchen machines to remove the sous vide package from the cooking pot containing hot water after cooking. Also removing the cooking mat from the hot cooking pot is cumbersome.

The present disclosure is directed at the object of providing an attachment for a kitchen machine comprising a cooking pot, a cooking pot assembly and a kitchen machine, which facilitate and improve sous vide cooking.

This object is addressed by an attachment for a kitchen machine as defined in claim 1, a cooking pot assembly as defined in claim 6, and a kitchen machine as defined in claim 15.

The attachment for a kitchen machine comprises a holder configured to hold items to be heated, and a first handle and a second handle extending from opposite edges of the holder in directions away from each other and away from an axis perpendicular to the holder, and configured to hold the attachment in a fixed manner in a cooking pot of the kitchen machine. Thus, the first and second handles have a double function of holding the attachment and the items placed on it in a fixed and stable manner in the cooking pot and facilitating removing of the attachment together with the items placed on it from the cooking pot after cooking. Moreover, contrary to a conventional steaming basket, because of the first and second handles, the effective cooking volume in the cooking pot can be substantially increased. Specifically, the effective cooking volume above the accessory can be maximized to surround food with water from all sides.

To further facilitate removing of the attachment from the cooking pot after cooking, the first handle may comprise a first gripping element and the second handle may comprise a second gripping element, wherein the first and second gripping elements extend from edges of the first and second handles, which are opposite the holder, in directions towards each other and in parallel to the holder. Preferably, the first and second gripping elements are located in such distance from the holder that when the attachment is placed in the cooking pot, the first and second gripping elements are located above a maximum filling level of the cooking pot (indicated by a mark at the inner sidewall of the cooking pot) so that a user can easily grip and remove the attachment without the risk of touching the hot cooking pot and/or the hot water. Since the first and second gripping elements extend in directions towards each other and in parallel to the holder, it is possible to close the cooking pot with a lid while at the same time not decreasing the effective cooking volume.

To ensure that the attachment is held in position when the attachment is inserted in a cooking pot and the cooking pot is closed by a lid being in contact with upper surfaces of the first and second gripping elements, a ratio of a length of the first gripping element in a direction along the edge of the holder to a diameter of the holder may be between 0,20 to 0,35, preferably between 0,25 to 0,33, and/or a ratio of a length of the second gripping element in a direction along the edge of the holder to a diameter of the holder may be between 0,20 to 0,35, preferably between 0,25 to 0,33.

To facilitate packing and storage of the attachment, and cleaning of the attachment in a dishwasher, the first handle and the second handle may be releasably attached to the holder. Specifically, to facilitate attaching the first handle and the second handle to the holder of the attachment, the holder may comprise two opposite holes which are located near edges of the holder and through which ends of the first and second handles comprising hook elements may be stuck and thereafter rotated in order to lock the first and second handles to the holder. Thus, no separate connection elements are necessary. Preferably, the first handle and the second handle, and the two opposite holes in the holder are identical so that assembling of the first and second handles with the holder is facilitated by not being able to mix-up which holder belongs to which hole.

In a preferred embodiment, the holder has a disc shape and comprises a plurality of holes, wherein the sizes of the holes gradually increase from the center of the holder towards the edge of the holder. Such a hole structure has shown to provide fluid-mechanical advantages for ensuring a constant temperature and even temperature distribution of a water bath in a cooking pot, in which the water bath is stirred by a stirring device, for example by blades of a stirring device. In one embodiment, the hole structure comprises groups of holes, wherein each group forms a line shape, and the sizes of the holes of each group gradually increase from the center of the holder towards the edge of the holder. The hole structure also helps to keep the food items to be sous vide cooked in a plastic bag at a constant location and orientation on the holder, even during vigorous stirring of the water bath.

To further improve the constant temperature and even temperature distribution of the water bath in the cooking pot, the attachment should be located as close as possible to the stirring device, however, without getting in contact with the stirring device. Stirring devices usually comprise at least one blade that is rotated by a drive shaft driven by an electric motor, wherein the drive shaft comprises at its upper end a blade nut extending from the drive shaft. Thus, to enable fixing the attachment in the cooking pot with a distance as close as possible to the stirring device, the holder may comprise at a center of a side facing away from the first and second handles a recess. Preferably, the recess has such a shape that the blade nut fits therein without getting in contact with the holder.

To facilitate manufacturing and ensure stability of the attachment in the hot water bath, the attachment may be injection molded in polypropylene (PP).

The present disclosure further concerns a cooking pot assembly for a kitchen machine, which comprises a cooking pot and an attachment, preferably, any of the attachments defined above. The cooking pot may be made of stainless steel and comprises a bottom wall and a tapered sidewall, and a blade assembly located above the bottom wall and configured to be rotated. The attachment is releasably fixed in the cooking pot above the blade assembly. Thus, a constant temperature and even temperature distribution of a water bath in the cooking pot can be provided.

To facilitate fixing and removing the attachment to and from the cooking pot while at the same time maximizing the effective cooking volume in the cooking pot, the releasable fixing of the attachment in the cooking pot is caused by the outer surfaces of the first handle and the second handle, and a circumferential surface of the holder being in contact with an inside of the tapered sidewall. Thus, no protrusions for holding the attachment at a predetermined location above the blade assembly are required, which facilitates cleaning of the cooking pot since food remains and dirt more easily sticks at protrusions than at plain surfaces of the cooking pot. Moreover, the contacts of the outer surfaces of the first handle and the second handle, and the circumferential surface of the holder with the inside of the tapered sidewall may be the only contacts of the attachment with the cooking pot and the only means fixing the attachment in a stable manner in the cooking pot, which enables substantially flat inner surfaces of the cooking pot, thus, facilitating manufacturing of the cooking pot. Hence, the first and second handles have a double function of helping a user to insert the attachment into and remove the attachment from the cooking pot, and additionally fixing the attachment in a stable manner in the cooking pot.

To further fix the attachment in a stable manner in the cooking pot, the cooking pot may comprise a lid configured to lock the cooking pot, wherein the lid comprises an annular protrusion facing the inside of the cooking pot, and the releasable fixing of the attachment in the cooking pot is further caused by the annular protrusion being in contact with surfaces of the first gripping element and the second gripping element facing the lid. Moreover, the contacts of the outer surfaces of the first handle and the second handle, the circumferential surface of the holder with the inside of the tapered sidewall, and the annular protrusion with the surfaces of the first gripping element and the second gripping element may be the only contacts of the attachment with the cooking pot and the only means for fixing the attachment in a stable manner in the cooking pot. Specifically, in order to facilitate manufacturing of the cooking pot without any protrusions for holding the attachment in the cooking pot, the cooking pot may have such a shape that the surface of the holder facing the bottom wall does not get into contact with the cooking pot.

To further ensure a stable holding of the attachment in the cooking pot, the shapes of the outer surfaces of the first handle and the second handle may correspond to the shape of the inside of the tapered inner sidewall of the cooking pot.

To provide a constant temperature and even temperature distribution of the water bath while at the same time maximizing the effective cooking volume in the cooking pot, the attachment may be releasably fixed in the cooking pot such that the holder is parallel to the bottom wall, and a distance between the surface of the holder and the surface of the bottom wall facing each other is between 40,00mm and 60,00mm, preferably between 40,00mm and 50,00mm, and further preferably between 43,00mm and 45,00mm. Tests have shown that such distances have a positive impact on the temperature distribution of the water bath in the cooking pot.

According to a further embodiment helping to enable a constant temperature and even temperature distribution of the water bath while at the same time maximizing the effective cooking volume in the cooking pot, the attachment may be releasably fixed in the cooking pot such that a distance between the surface of the holder facing the bottom wall and blades of the blade assembly is between 4,00mm and 10,00mm, preferably between 4,00mm and 7,00mm, and further preferably between 3,00mm and 5,00mm. Tests have shown that these distances have a positive impact on the temperature distribution of the water bath in the cooking pot.

In a preferred embodiment, the cooking pot assembly further comprises a heating element configured to heat the inside of the cooking pot through the bottom wall, wherein the heating element is configured to heat the inside of the cooking pot at a temperature between 55 °C and 70 °C for more than 1 hour, preferably between 1 to 4 hours, further preferably for more than 2 hours. The heating element may for example be a heating film in contact with a surface of the bottom wall facing away from the attachment.

The blade assembly may comprise a blade nut facing the holder. Since the blade nut is rotated, in order to protect the attachment from the blade nut while at the same time ensuring a constant temperature and even temperature distribution of the water bath in the cooking pot, a distance between the holder and the blade nut may be between 2,00mm and 3,00mm, preferably between 2,50mm and 3,50mm, and further preferably between 2,90mm and 3,00mm.

The present disclosure further concerns a kitchen machine comprising any of the above defined cooking pots and attachments.

As explained above, the attachment, the cooking pot assembly, and the kitchen machine cause a plurality of advantages for sous vide cooking. Without the attachment, sous vide cooking may not occur effectively since the water in the cooking pot would be too turbulent. Assuming that the cooking pot is heated by the heating element and the blades of the stirring device are rotated at a minimum of 130 revolutions per minute (RPM), a vortex is caused in the water. This disruption in the water is too large to allow consistent sous vide cooking over time. However, the attachment mitigates this problem by acting as a flow barrier such that the vortex generated by the blades is filtered through the attachment, thus reducing turbulences.

The attachment further helps to ensure that the temperature gradient in the water bath does not become too great. When the cooking pot is heated through its bottom wall by the heating element, a sharp initial temperature gradient within the cooking pot is created, which results in an inconsistent temperature distribution throughout the water in the cooking pot. However, for optimum results, sous vide cooking requires a consistent temperature. The attachment mitigates this problem by separating the cooking pot into two areas, i.e., a lower heating area below the holder of the attachment, and an upper cooking area above the holder of the attachment. The holes in the holder allow heated water to percolate from the lower heating area (where the temperature gradient is the largest) into the upper cooking area where it helps to stabilize the temperature distribution throughout the water bath. Specifically, the shape structure of the holes in the holder according to the present disclosure helps to cause a stable temperature distribution in the water bath. Thus, the attachment enables a higher temperature gradient below the attachment and a relatively small temperature gradient and very few vortexes above the attachment, which is of particular advantage for sous vide cooking.

Since the blades are exposed in the cooking pot, without the attachment, the food items to be cooked may interact with the spinning blades resulting in damage and/or chopping of the food items to be cooked. The attachment prevents this from happening whilst also maximizing the space used for sous vide cooking without having to remove the blade assembly from the cooking pot.

The foregoing summary, as well as the following detailed description of the embodiments, will be better understood when read in conjunction with the drawings. It will be understood that the invention is not limited to the specific embodiments disclosed, and reference is made to the claims for that purpose. In the drawings:
- Figs. 1 to 8: schematically show an embodiment of an attachment for a kitchen machine, specifically
- Fig. 1: shows a top view of the attachment,
- Fig. 2: shows a first side view of the attachment,
- Fig. 3: shows a bottom view of the attachment,
- Fig. 4: shows a perspective top view of the attachment with released handles,
- Fig. 5: shows a perspective bottom view of the attachment with released handles,
- Fig. 6: shows a perspective top view of the attachment with attached handles,
- Fig. 7: shows a perspective bottom view of the attachment with attached handles, and
- Fig. 8: shows a second side view of the attachment; and

- Figs. 9 to 12: schematically show an embodiment of cooking pot assembly, specifically

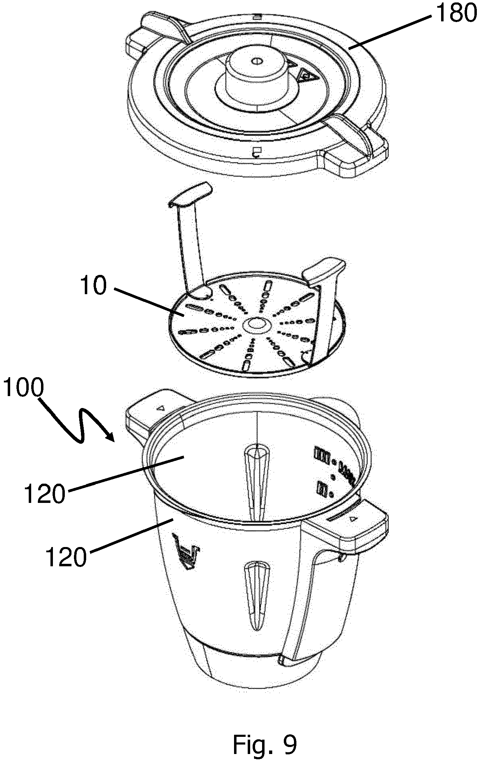

- Fig. 9: shows a cooking pot assembly with separated parts lid, attachment and cooking pot,

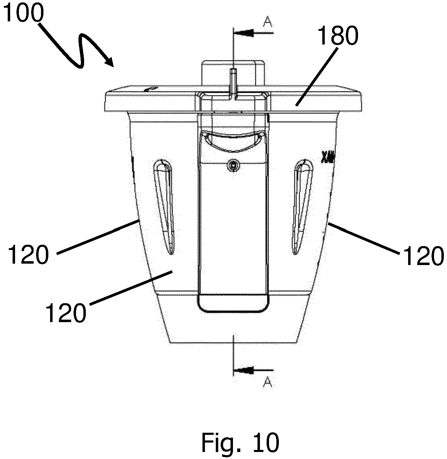

- Fig. 10: shows a side view of a cooking pot assembly with a closed lid,

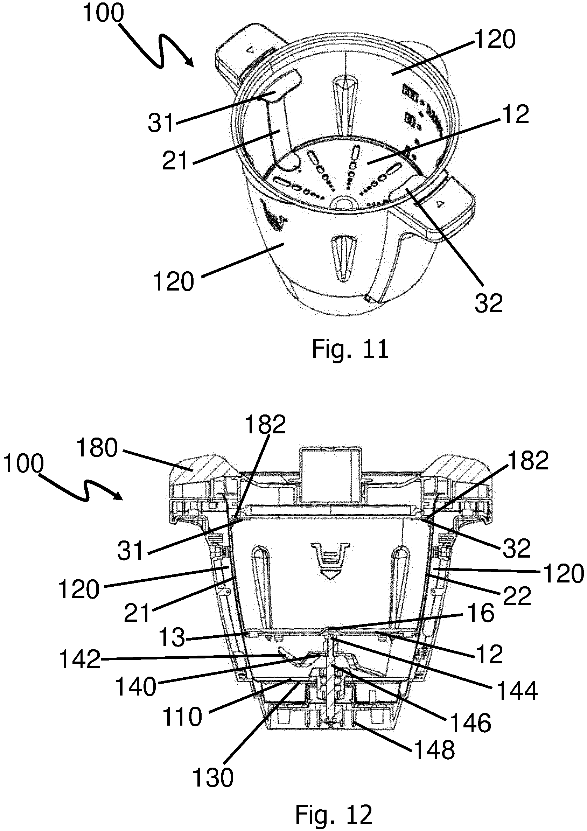

- Fig. 11: shows a perspective top view of a cooking pot with an inserted attachment, and
- Fig. 12: shows a cross-sectional view of the cooking pot assembly of Fig. 10 (see line "A").

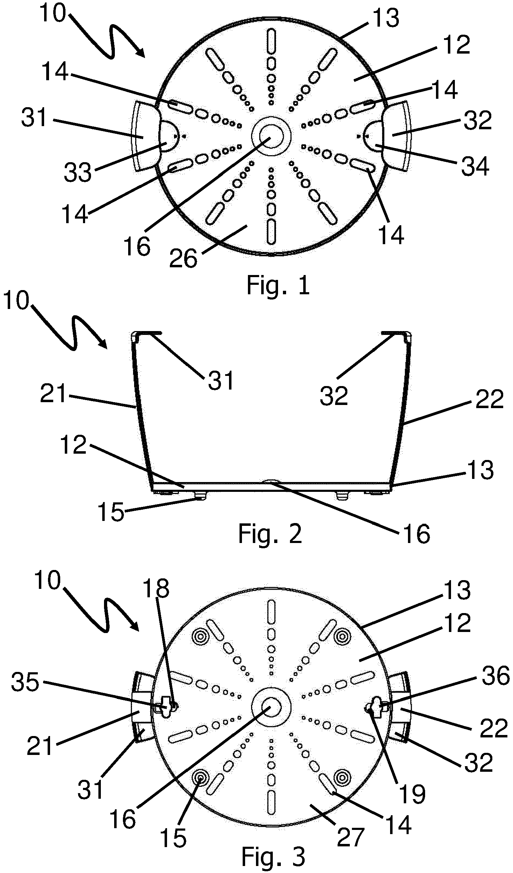

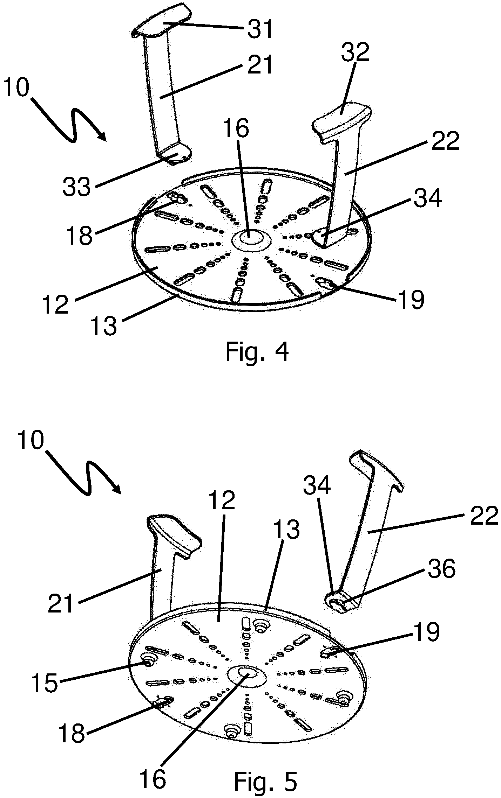

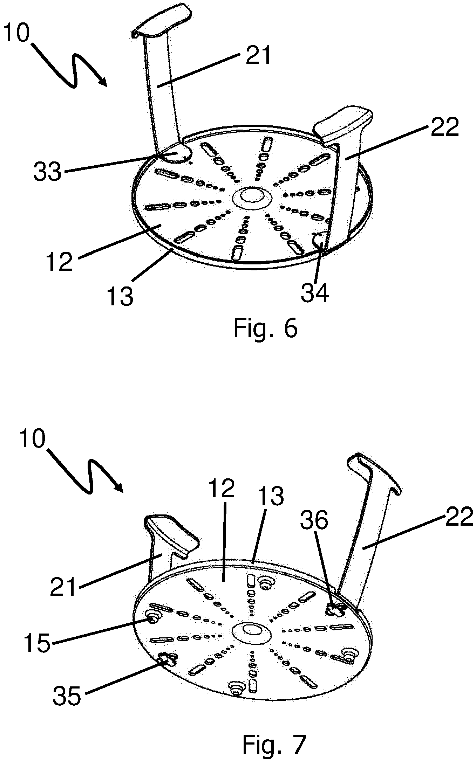

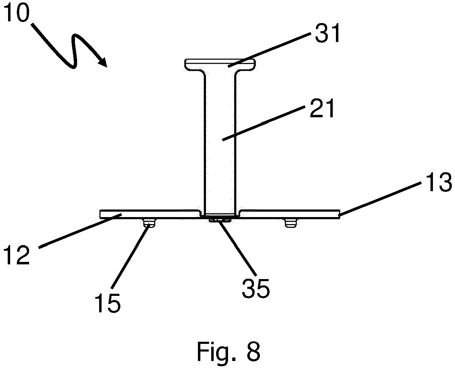

Figs. 1 to 8 schematically show an embodiment of an attachment 10 to be inserted into a cooking pot of a kitchen machine. The attachment 10 comprises a holder 12, a first handle 21 and a second handle 22. The attachment 10 is designed to be used for sous vide cooking.
For this, a user may place packaged food (not shown in Figs. 1 to 8) on the holder 12, grab with his left hand the first handle 21 and with his right hand the second handle 22, and place the attachment 10 into a water bath of a cooking pot, and thereafter close the cooking pot with a lid.

The holder 12 has a round disc shape with an upper surface 26, a lower surface 27 and a circumferential surface 13. At the center of the holder 12, a recess 16 is provided. The recess 16 has a closed dome shape and extends from the upper surface 26 in an upper direction. The holder 12 comprises a plurality of holes 14. The plurality of holes 14 extends in groups from the center of the holder 12, i.e., from the recess 16, towards the circumferential surface 13. Specifically, each group of holes 14 forms a line shape, wherein the size of each hole 14 gradually increases from the center of the holder 12 towards the circumferential surface 13. In the embodiment according to Figs. 1 to 8, each line-shaped group of holes 14 comprises six holes, and the hole-structure comprises ten groups of holes 14. However, the number of holes 14 in each group and the number of groups are not limited to these specific numbers and may be varied by any of one to five.

The holder 12 further comprises adjacent to the circumferential surface 13 a first fastening hole 18 and a second fastening hole 19, which are located opposite each other with regard to the center of the holder 12, and which are used for attaching the first handle 21 and the second handle 22 to the holder 12.

The first handle 21 and the second handle 22 are identical. The first handle 21 comprises at one end of a slightly bent block-shaped part a first gripping element 31 and at an opposite end of the slightly bent block-shaped part a first fastening element 33. Similar, the second handle 22 comprises at one end a second gripping element 32 and at an opposite end a second fastening element 34. The first gripping element 31 and the second gripping element 32 have a substantially trapezoidal surface shape. When attached to the holder 12, the first gripping element 31 and the second gripping element 32 extend substantially in parallel to the holder 12 towards each other, and the first fastening element 33 and the second fastening element 34 extend substantially in parallel to the holder 12 towards each other. The attachment 10 is made of polypropylene.

As can be seen from the top view of Fig. 1, each of the first gripping element 32 and the second gripping element 33 has a length that substantially matches two outermost holes 14 of two neighboring hole groups. Moreover, when seen from above, each of the first gripping element 31 and the second gripping element 32 overlaps the edge of the holder 12 at the circumferential surface 13. Furthermore, the length of each gripping element 31 and 32 along the direction of the circumferential surface 13 substantially doubles its width. Furthermore, a ratio of the length of the first gripping element 31 and/or the second gripping element 32 in the direction along the edge, i.e., the circumferential surface 13, of the holder 12 to the diameter of the holder 12 is preferably between 0,20 to 0,35, further preferably between 0,25 to 0,33 These dimensions help to fix the attachment 10 in a stable manner in a cooking pot when the cooking pot is closed by a lid.

The first fastening element 33 and the second fastening element 34 each has a plate shape that extends on the upper surface of the holder 12 towards the center of the holder 12. At bottom sides of each of the first fastening element 33 and the second fastening element 34, extensions with first and second hook elements 35 and 36 are provided. The shapes of the first and second hook elements 35 and 36 correspond to the shapes of the first and the second fastening holes 18 and 19. For attaching the first handle 21 to the holder 12, the first hook element 35 is stuck through the first fastening hole 18, and then rotated by 90° so that the first handle 21 is fixed to the holder 12 by means of the holder 12 being sandwiched between the first fastening element 33 and the first hook element 35. Similar, the second handle 22 may be attached to the holder 12. For detaching the first handle 21 and the second handle 22 from the holder 12, both of the first handle 21 and the second handle 22 may be rotated by 90° so that the first fastening element 33 and the second fastening element 34 with the first and second hook elements 35 and 36 can be removed from the first and second fastening holes 18 and 19.

Figs. 9 to 12 schematically show an embodiment of a cooking pot assembly comprising a cooking pot 100 and an attachment 10. The cooking pot 100 is configured to be placed into a kitchen machine (not shown in Figs. 9 to 12). The kitchen machine may comprise an electrical energy supply and drive means for driving a blade assembly 140 in the cooking pot 100. Moreover, the kitchen machine may comprise a user interface and control means for controlling the cooking.

The attachment 10 may be the attachment described with regard to Figs. 1 to 8. As can be seen from Figs. 9, 10 and 12, the cooking pot 100 can be closed by a lid 180. For example, the closure may be provided by a rotational movement of the lid 180 in relation to the cooking pot 100.

In the following, only elements of the cooking pot 100 and the lid 180 that are essential for the present disclosure are described in detail. Other standard elements of a kitchen machine, a cooking pot and a lid that are known to a person skilled in the art are not described herein.

The cooking pot 100 comprises a bottom wall 110 and a tapered sidewall 120. The cooking pot is configured to hold the attachment 10 and a liquid, for example water, therein. The cooking pot 100 is made of stainless steel. As can be seen from Fig. 12, a heating film 130 for heating a water bath in the cooking pot 100 is provided below the bottom wall 110. Electrical contacts 148 supply the heating film 130 with electrical energy from the kitchen machine (not shown in the Figs.). The heating film 130 is configured to heat the inside of the cooking pot 100 through the bottom wall 110. Specifically, the heating film 130 is configured to heat the inside of the cooking pot 100 at a temperature between 55 °C and 70 °C for more than 1 hour, preferably between 1 to 4 hours, further preferably for more than 2 hours.

The blade assembly 140 is provided above the bottom wall 110. The blade assembly 140 comprises a drive shaft 146 and at least one blade 142. At the top of the drive shaft 146, a blade nut 144 is provided. When the cooking pot 100 is placed in the kitchen machine, the drive shaft 146 is rotated by an electrical motor installed in the kitchen machine. Thus, upon operation of the blade assembly 140, the drive shaft 146 together with the blade nut 144 and the blades 142 are rotated.

Figs. 11 and 12 illustrate a situation when the attachment 10 is inserted in the cooking pot 100. As can be seen from Fig. 12, only the outer surface of the first handle 21, the outer surface of the second handle 22, and the circumferential surface 13 of the holder 12 are in contact with the tapered sidewall 120 of the cooking pot 100. Specifically, no other surface or side of the holder 12 is in contact with the cooking pot 100. In particular, the lower surface of the holder 12 facing the bottom wall 110 is not in contact with the bottom wall 110. Further, the holder 12 is not in contact with the blade assembly 140. Thus, the attachment 10 is held in a fixed manner in the cooking pot 100 by the outer surfaces of the first and second handles 21 and 22, and the outer circumferential surface 13 of the holder 12. Hence, no protrusion or extension at the sidewall 120 or the bottom wall 110 of the cooking pot 100 is necessary in order to hold the attachment 10 in a fixed and stable manner in the cooking pot 100.

The lid 180 has a circular shape that matches the shape of the upper edge of the cooking pot 100 and comprises an annular protrusion 182 facing the cooking pot 100. When the lid 180 closes the cooking pot 100, as shown in Fig. 12, the annular protrusion 182 is in contact with the upper surface of the first gripping element 31 and the upper surface of the second gripping element 32, thus supporting a fixed and stable holding of the attachment 10 in the cooking pot 100. Specifically, a ratio of the length of the first gripping element 31 and/or the second gripping element 32 in the direction along the circumferential surface 13 of the holder 12 to the diameter of the holder 12 of between 0,20 to 0,35, or between 0,25 to 0,33, helps to provide the stable support of the attachment 10 in the cooking pot 100. Moreover, the annular protrusion 182 may be the only contact between the lid 180 and the attachment 10.

Preferably, the attachment 10 is releasably fixed in the cooking pot 100 such that the holder 12 is parallel to the bottom wall 110, and a distance between the surface of the holder 12 and the surface of the bottom wall 110 facing each other is between 40,00mm and 60,00mm, preferably between 40,00mm and 50,00mm, and further preferably between 43,00mm and 45,00mm. Moreover, a distance between the surface of the holder 12 facing the bottom wall 110 and the blades 142 of the blade assembly 140 is between 4,00mm and 10,00mm, preferably between 4,00mm and 7,00mm, and further preferably between 3,00mm and 5,00mm.

In order to provide a minimum distance between the blade 142 and the holder 12, the blade nut 144 extends into the recess 16 without getting in contact with the holder 12. A distance between the holder 12, i.e., the recess 16, and the blade nut 144 may be between 2,00mm and 3,00mm, preferably between 2,50mm and 3,50mm, and further preferably between 2,90mm and 3,00mm.

In the following, a method of sous vide cooking with the attachment 10 and the cooking pot 100 of the present disclosure is described. The cooking port 100 is filled with water up to a maximum filling mark of the cooking pot. Thereafter, the water is heated by the heating film 130. The attachment 10 is still outside of the cooking pot 100 and sous vide cooking packages are placed on the holder 12. A user then grabs the first gripping part 31 and the second gripping part 32 with both of his hands and places the attachment 10 with the sous vide cooking packages into the water bath inside the cooking pot 100. Since the first gripping part 31 and the second gripping part 32 are above the maximum filling mark of the cooking pot 100 when the attachment 10 is fixed inside the cooking pot 100, the user cannot burn his hands in the hot water. Thereafter, the user closes the cooking pot 100 with the lid 180, the blade 142 starts rotating, and the user waits until the cooking is finished.

After the cooking is finished, the user opens and removes the lid 180 from the cooking pot 100. Then, he grabs the first gripping part 31 and the second gripping part 32 with both of his hands and removes the attachment 10 together with the cooked sous vide cooking packages from the water bath inside the cooking pot 100. Again, since the first gripping part 31 and the second gripping part 32 are located above the maximum filling mark of the cooking pot 100, the user can easily remove the attachment 10 from the cooking pot 100 without risking to burn his hands in the hot water.

Although the present disclosure has been described in detail with reference to exemplary attachments, cooking pots and kitchen machines, it should be understood that various changes, substitutions, and alterations can be made herein without departing from the invention as defined by the appended claims. The scope of the present disclosure is not intended to be limited to the particular attachments, cooking pots and kitchen machines described herein.

## Claims

1. An attachment (10) for a kitchen machine, comprising
a holder (12) configured to hold items to be heated; and
a first handle (21) and a second handle (22) extending from opposite edges of the holder (12) in directions away from each other and away from an axis perpendicular to the holder (12), and configured to hold the attachment (10) in a fixed manner in a cooking pot (100) of the kitchen machine.

2. The attachment (10) as claimed in claim 1, wherein
the first handle (21) comprises a first gripping element (31) and the second handle (22) comprises a second gripping element (32), the first and second gripping elements (31, 32) extend from edges of the first and second handles (21, 22), which are opposite the holder (12), in directions towards each other and in parallel to the holder (12).

3. The attachment (10) as claimed in claim 2, wherein
a ratio of a length of the first gripping element (31) in a direction along the edge of the holder (12) to a diameter of the holder (12) is between 0,20 to 0,35, preferably between 0,25 to 0,33, and/or a ratio of a length of the second gripping element (32) in a direction along the edge of the holder (12) to a diameter of the holder (12) is between 0,20 to 0,35, preferably between 0,25 to 0,33.

4. The attachment (10) as claimed in any preceding claim, wherein
the first handle (21) and the second handle (21) are releasable attached to the holder (12); and/or
the holder (12) comprises at a center of a side facing away from the first and second handles (21, 22) a recess (16).

5. The attachment (10) as claimed in any preceding claim, wherein
the holder (12) has a disc shape and comprises a plurality of holes (14), wherein the sizes of the holes (14) gradually increase from the center of the holder (12) towards the edge of the holder (12).

6. A cooking pot assembly for a kitchen machine, comprising a cooking pot (100) and the attachment (10) as claimed in any preceding claim, wherein
the cooking pot (100) comprising
a bottom wall (110) and a tapered sidewall (120), and
a blade assembly (140) located above the bottom wall (110) and configured to be rotated; and
the attachment (10) being releasably fixed in the cooking pot (100) above the blade assembly (140).

7. The cooking pot assembly as claimed in claim 6, wherein
the releasable fixing of the attachment (10) in the cooking pot (100) is caused by outer surfaces of the first handle (21) and the second handle (22), and a circumferential surface (13) of the holder (12) being in contact with an inside of the tapered sidewall (120).

8. The cooking pot assembly as claimed in claim 7, wherein
the cooking pot (100) further comprises a lid (180) configured to lock the cooking pot (100), the lid (180) comprising an annular protrusion (182) facing the inside of the cooking pot (100), and
the releasable fixing of the attachment (10) in the cooking pot (100) is further caused by the annular protrusion (182) being in contact with surfaces of the first gripping element (31) and the second gripping element (32) facing the lid (180).

9. The cooking pot assembly as claimed in and of claims 6 to 8, wherein
the shapes of the outer surfaces of the first handle (21) and the second handle (22) correspond to the shape of the inside of the tapered sidewall (120).

10. The cooking pot assembly as claimed in and of claims 6 to 9, wherein
the surface of the holder (12) facing the bottom wall (110) is not in contact with the cooking pot (100).

11. The cooking pot assembly as claimed in and of claims 6 to 10, wherein
the attachment (10) is releasably fixed in the cooking pot (100) such that the holder (12) is parallel to the bottom wall (110), and a distance between the surface of the holder (12) and the surface of the bottom wall (110) facing each other is between 40,00mm and 60,00mm, preferably between 40,00mm and 50,00mm, and further preferably between 43,00mm and 45,00mm.

12. The cooking pot assembly as claimed in and of claims 6 to 11, wherein
the attachment (10) is releasably fixed in the cooking pot (100) such that a distance between the surface of the holder (12) facing the bottom wall (110) and blades (142) of the blade assembly (140) is between 4,00mm and 10,00mm, preferably between 4,00mm and 7,00mm, and further preferably between 3,00mm and 5,00mm.

13. The cooking pot assembly as claimed in and of claims 6 to 12, further comprising
a heating element (130) configured to heat the inside of the cooking pot (100) through the bottom wall (110), wherein
the heating element (130) is configured to heat the inside of the cooking pot (100) at a temperature between 55 °C and 70 °C for more than 1 hour, preferably between 1 to 4 hours, further preferably for more than 2 hours.

14. The cooking pot assembly as claimed in and of claims 6 to 13, wherein
the blade assembly (140) comprises a blade nut (144) facing the holder (12), and
a distance between the holder (12) and the blade nut (144) is between 2,00mm and 3,00mm, preferably between 2,50mm and 3,50mm, and further preferably between 2,90mm and 3,00mm.

15. A kitchen machine comprising the cooking pot assembly of any of claims 6 to 14.

## Amended claims

### Amended claims in accordance with Rule 137(2) EPC.

1. An attachment (10) for a kitchen machine, comprising
a holder (12) configured to hold items to be heated; and
a first handle (21) and a second handle (22) extending from opposite edges of the holder (12) in directions away from each other and away from an axis perpendicular to the holder (12), and configured to hold the attachment (10) in a fixed manner in a cooking pot (100) of the kitchen machine, wherein
the first handle (21) comprises a first gripping element (31) and the second handle (22) comprises a second gripping element (32), the first and second gripping elements (31, 32) extend from edges of the first and second handles (21, 22), which are opposite the holder (12), in directions towards each other and in parallel to the holder (12).

2. The attachment (10) as claimed in claim 1, wherein
a ratio of a length of the first gripping element (31) in a direction along the edge of the holder (12) to a diameter of the holder (12) is between 0,20 to 0,35, preferably between 0,25 to 0,33, and/or a ratio of a length of the second gripping element (32) in a direction along the edge of the holder (12) to a diameter of the holder (12) is between 0,20 to 0,35, preferably between 0,25 to 0,33.

3. The attachment (10) as claimed in any preceding claim, wherein
the first handle (21) and the second handle (21) are releasable attached to the holder (12); and/or
the holder (12) comprises at a center of a side facing away from the first and second handles (21, 22) a recess (16).

4. The attachment (10) as claimed in any preceding claim, wherein
the holder (12) has a disc shape and comprises a plurality of holes (14), wherein
the sizes of the holes (14) gradually increase from the center of the holder (12) towards the edge of the holder (12).

5. A cooking pot assembly for a kitchen machine, comprising a cooking pot (100) and an attachment (10), wherein
the attachment (10) comprising
a holder (12) configured to hold items to be heated; and
a first handle (21) and a second handle (22) extending from opposite edges of the holder (12) in directions away from each other and away from an axis perpendicular to the holder (12), and configured to hold the attachment (10) in a fixed manner in the cooking pot (100) of the kitchen machine; and
the cooking pot (100) comprising
a bottom wall (110) and a tapered sidewall (120), and
a blade assembly (140) located above the bottom wall (110) and configured to be rotated; and
the attachment (10) being releasably fixed in the cooking pot (100) above the blade assembly (140).

6. The cooking pot assembly as claimed in claim 5, wherein
the releasable fixing of the attachment (10) in the cooking pot (100) is caused by outer surfaces of the first handle (21) and the second handle (22), and a circumferential surface (13) of the holder (12) being in contact with an inside of the tapered sidewall (120).

7. The cooking pot assembly as claimed in claim 6, wherein
the cooking pot (100) further comprises a lid (180) configured to lock the cooking pot (100), the lid (180) comprising an annular protrusion (182) facing the inside of the cooking pot (100), and
the releasable fixing of the attachment (10) in the cooking pot (100) is further caused by the annular protrusion (182) being in contact with surfaces of the first gripping element (31) and the second gripping element (32) facing the lid (180).

8. The cooking pot assembly as claimed in and of claims 5 to 7, wherein
the shapes of the outer surfaces of the first handle (21) and the second handle (22) correspond to the shape of the inside of the tapered sidewall (120).

9. The cooking pot assembly as claimed in and of claims 5 to 8, wherein
the surface of the holder (12) facing the bottom wall (110) is not in contact with the cooking pot (100).

10. The cooking pot assembly as claimed in and of claims 5 to 9, wherein
the attachment (10) is releasably fixed in the cooking pot (100) such that the holder (12) is parallel to the bottom wall (110), and a distance between the surface of the holder (12) and the surface of the bottom wall (110) facing each other is between 40,00mm and 60,00mm, preferably between 40,00mm and 50,00mm, and further preferably between 43,00mm and 45,00mm.

11. The cooking pot assembly as claimed in and of claims 5 to 10, wherein
the attachment (10) is releasably fixed in the cooking pot (100) such that a distance between the surface of the holder (12) facing the bottom wall (110) and blades (142) of the blade assembly (140) is between 4,00mm and 10,00mm, preferably between 4,00mm and 7,00mm, and further preferably between 3,00mm and 5,00mm.

12. The cooking pot assembly as claimed in and of claims 5 to 11, further comprising
a heating element (130) configured to heat the inside of the cooking pot (100) through the bottom wall (110), wherein
the heating element (130) is configured to heat the inside of the cooking pot (100) at a temperature between 55 °C and 70 °C for more than 1 hour, preferably between 1 to 4 hours, further preferably for more than 2 hours.

13. The cooking pot assembly as claimed in and of claims 5 to 12, wherein
the blade assembly (140) comprises a blade nut (144) facing the holder (12), and
a distance between the holder (12) and the blade nut (144) is between 2,00mm and 3,00mm, preferably between 2,50mm and 3,50mm, and further preferably between 2,90mm and 3,00mm.

14. A kitchen machine comprising the cooking pot assembly of any of claims 5 to 13.
